# FASCICULE DE BREVET EUROPEEN

(11) **EP 0 457 683 B1**
(45) Date de publication et mention de la délivrance du brevet: **18.01.1995**
(21) Numéro de dépôt: 91401267.9
(22) Date de dépôt: 16.05.1991
(51) Int. Cl.: B65H 75/18, B64G 1/44

(54) **Bobine à câble captif et son application à un régulateur de déploiement d'un appendice d'engin spatial**
Haspel mit gefangenem Kabel und ihre Anwendung in einem Entfaltungsregler von einem Ansatzteil eines Raumflugkörpers
Reel with captive cable and its use in a deployment regulator of an appendix of a spacecraft

(30) Priorité: 18.05.1990 FR 9006264
(43) Date de publication de la demande: 21.11.1991
(73) Titulaire: AEROSPATIALE Société Nationale Industrielle, 75781 Paris Cédex 16 (FR)
(72) Inventeur: Henry, Jean-Pierre, F-06560 Valbonne (FR)
(74) Mandataire: Poulin, Gérard

(56) Documents cités:
- WO-A-88/06564
- FR-A- 1 505 831
- FR-A- 2 470 727

## Description

L'invention concerne une bobine à câble captif conçue notamment pour être utilisée dans un régulateur de déploiement d'un appendice tel qu'un générateur solaire ou une antenne équipant un engin spatial. L'invention concerne également un régulateur à câble comportant une telle bobine à câble captif.

Les engins spatiaux tels que les satellites sont habituellement équipés d'un certain nombre d'appendices déployables tels que des générateurs solaires, des réflecteurs d'antennes, des mâts, etc.. Pendant toute la phase du lancement du satellite, ces appendices sont maintenus dans une position repliée afin, d'une part, de réduire l'encombrement et, d'autre part, d'éviter de les endommager. Le maintien des appendices dans cette position repliée est assuré par des dispositifs de gerbage constitués, par exemple, par des boulons traversant les différents panneaux constituant chaque générateur solaire.

Lorsque le satellite est placé sur orbite, des cisailles pyrotechniques sont déclenchées afin de couper les boulons de gerbage et de libérer les générateurs solaires ou les appendices similaires. Le déploiement proprement dit est alors assuré par des organes élasliques montés dans les charnières qui relient chacun des panneaux du générateur solaire.

Habituellement, ces organes élastiques sont constitués par des ressorts de torsion qui exercent entre les panneaux adjacents un couple de déploiement relativement élevé. Pour éviter que des chocs trop importants ne se produisent en fin de déploiement, on est donc amené à réguler la vitesse de déploiement des panneaux.

A cet effet, on utilise habituellement des régulateurs de déploiement à câble qui comprennent une bobine montée sur un arbre relié à un frein centrifuge par un mécanisme multiplicateur de vitesse. Un câble, initialement enroulé sur la bobine, est fixé par son extrémité sur l'appendice dont on désire réguler le déploiement. Lorsque le déploiement de l'appendice est déclenché, le câble se déroule de la bobine et celle-ci entraîne en rotation, à une vitesse qui est accrue par le multiplicateur de vitesse, des masselottes rotatives du frein centrifuge. Des patins de frottement solidaires de ces masselottes viennent alors au contact d'une piste stationnaire, ce qui a pour effet d'en réguler la vitesse de rotation et, par conséquent, de réguler le déploiement de l'appendice.

Dans un tel régulateur de déploiement à câble, on utilise habituellement un câble métallique tressé ayant une raideur de flexion qui tend à le ramener spontanément à l'état quasi rectiligne, donc à le dérouler d'une bobine à l'état libre. Pour cette raison, on place habituellement la bobine sur laquelle est enroulé initialement le câble à l'intérieur d'un carter qui contient également le frein centrifuge et le mécanisme multiplicateur de vitesse. Cependant, étant donné qu'il est indispensable de prévoir un certain jeu entre le câble et le carter, la raideur de flexion du câble tend à faire foisonner ce dernier sur la bobine lorsque cette dernière est bloquée et qu'une tension significative n'est pas exercée sur le câble. Dans les conditions les plus défavorables, un tel foisonnement peut entraîner un coincement du câble et le non déploiement de l'appendice. Lorsque cet appendice est un générateur solaire, cela peut donc conduire à rendre totalement inutilisables les équipements embarqués sur le satellite.

Dans la pratique, les risques qui viennent d'être mentionnés sont d'autant plus importants que les mécanismes de déploiement des appendices équipant les satellites sont essayés un certain nombre de fois avant que ce dernier ne soit envoyé dans l'espace. En effet, il est nécessaire après chacun de ces essais de rembobiner le câble sur la bobine, au travers d'une petite fenêtre de sortie du câble formée dans le carter, c'est-à-dire pratiquement sans visibilité.

Sur des équipements fonctionnant au sol, on a déjà envisagé de maintenir un câble captif sur une bobine au moyen d'une colle qui n'empêche pas le déroulement du câble lorsque celui-ci est désiré. Cette technique est notamment utilisée dans certains cas pour assurer le maintien en position bobinée du fil reliant au sol un missile filoguidé.

Cependant, cette technique présente certains inconvénients qui la rendent pratiquement inutilisable dans certains domaines et notamment dans l'espace. Ainsi, la présence de colle dont certaines particules sont arrachées au moment du déploiement serait inacceptable dans l'espace, car elle conduirait à déposer des particules polluantes sur les nombreux instruments optiques et autres équipant les satellites. Par ailleurs, le câble de régulation du déploiement circule sur des poulies et la présence de particules de colle sur ce câble risquerait d'entraîner son coincement. En outre, les conditions de température extrèmes subi es par les différents organes équipant les engins spatiaux (variation de température comprise entre environ -170°C et environ 100°C) auraient pour conséquence des changements de caractéristiques de toutes les colles existantes.

WO-A-88 06564 décrit une bobine à câble captif. Le câble est maintenu par soudure entre spires consécutives. Cette soudure n'est possible qu'avec un câble comportant une couche extérieure fusible.

L'invention a précisément pour objet une bobine à câble captif d'un type nouveau, ne présentant pas les inconvénients découlant de l'usage de la colle ou du soudage, et dont ou du soudage l'utilisation dans un régulateur de déploiement d'un appendice d'engin spatial conduit à supprimer les risques de foisonnement et, par conséquent, de coincement du câble lors du déploiement.

L'invention a aussi pour objet l'application d'une telle bobine à câble captif à un régulateur de déploiement d'un appendice d'engin spatial.

Selon l'invention, le premier de ces objectifs est atteint au moyen d'une bobine à câble captif, caractérisée par le fait que la bobine comporte sur sa surface extérieure une gorge sensiblement en forme d'hélice, dans laquelle est enroulé le câble, cette gorge comportant, à l'extérieur du câble, une zone de maintien de largeur inférieure au diamètre de ce dernier.

Dans une bobine ainsi réalisée, le câble est prisonnier dans la gorge hélicoïdale et son déroulement n'est possible que lorsque l'effort exercé sur le câble est suffisant pour lui faire traverser la zone de maintien soit en déformant cette zone, soit en déformant le câble, soit en déformant simultanément l'un et l'autre.

Dans un mode de réalisation préféré de l'invention, la gorge contient un seul brin du câble et la zone de maintien est formée par une partie extérieure d'une cloison séparant deux spires adjacentes de ladite gorge, rabattue sur le câble et qui se déforme de façon permanente lorsque ce dernier sort de la gorge. Le rabattement sur le fil de la partie extérieure de la cloison peut notamment être réalisé par sertissage ou repoussage.

Dans une bobine ainsi constituée, la cloison peut être réalisée avantageusement d'une seule pièce avec une partie centrale de la bobine, la gorge étant usinée dans un bloc métallique constituant cette dernière.

En variante, la bobine peut comprendre un empilement formé alternativement d'une première rondelle de relativement petit diamètre et d'épaisseur sensiblement égale au diamètre du fil, et d'une deuxième rondelle plus fine et de plus grand diamètre, formant ladite cloison.

Dans ce dernier cas, les premières rondelles et les deuxièmes rondelles peuvent être plates, les deuxièmes rondelles présentant des échancrures extérieures alignées pour le passage du câble d'une spire à l'autre.

Les premières rondelles peuvent également être déformées par gauchissement sur une distance sensiblement égale à leur épaisseur, de façon à définir des discontinuités alignées, les deuxièmes rondelles étant interrompues de part et d'autre de ces discontinuités, pour le passage du câble d'une spire à l'autre.

Par ailleurs, le second objectif de l'invention est atteint au moyen d'un régulateur à câble, pour le déploiement d'un appendice déployable d'engin spatial, comprenant un frein centrifuge en prise, par l'intermédiaire d'un multiplicateur de vitesse, sur une bobine sur laquelle est enroulé un câble dont l'extrémité opposée est fixée sur ledit appendice déployable, caractérisé par le fait que la bobine est une bobine à câble captif telle que définie précédemment, montée par des moyens de fixation démontables sur un arbre de sortie du multiplicateur de vitesse, à l'extérieur d'un carter contenant ce dernier ainsi que le frein centrifuge.

L'association de ces différentes caractéristiques permet de remplacer la bobine à câble captif, après chaque essai du mécanisme de déploiement d'un appendice déployable d'engin spatial, par une bobine identique appartenant à un même lot de fabrication ou de mêmes caractéristiques.

Différents modes de réalisation de l'invention vont à présent être décrits, à titre d'exemples non limitatifs, en se référant aux dessins annexés, dans lesquels :
- la figure 1 est une vue de face, en coupe longitudinale, illustrant de façon schématique un régulateur de déploiement à câble réalisé conformément à l'invention ;
- la figure 2 est une vue de face représentant à plus grande échelle un premier mode de réalisation de la bobine à câble captif équipant le régulateur de déploiement de la figure 1, la bobine étant représentée alors que l'appendice est en cours de déploiement ;
- les figures 3A, 3B et 3C sont des vues comparables à la figure 2 illustrant trois étapes successives de fabrication de la bobine à câble captif ;
- la figure 4 est une vue de face, en coupe partielle, illustrant un deuxième mode de réalisation de la bobine à câble captif conforme à l'invention, avant le sertissage du fil sur la bobine ;
- la figure 5 est une vue en perspective éclatée représentant les deux types de rondelles qui sont empilées de façon alternée pour former la bobine illustrée sur la figure 4 ;
- la figure 6 est une vue de face, en coupe partielle, illustrant un troisième mode de réalisation de l'invention ; et
- la figure 7 est une vue en perspective éclatée représentant les deux types de rondelles qui sont empilées de façon alternée pour former la bobine à câble captif illustrée sur le figure 5.

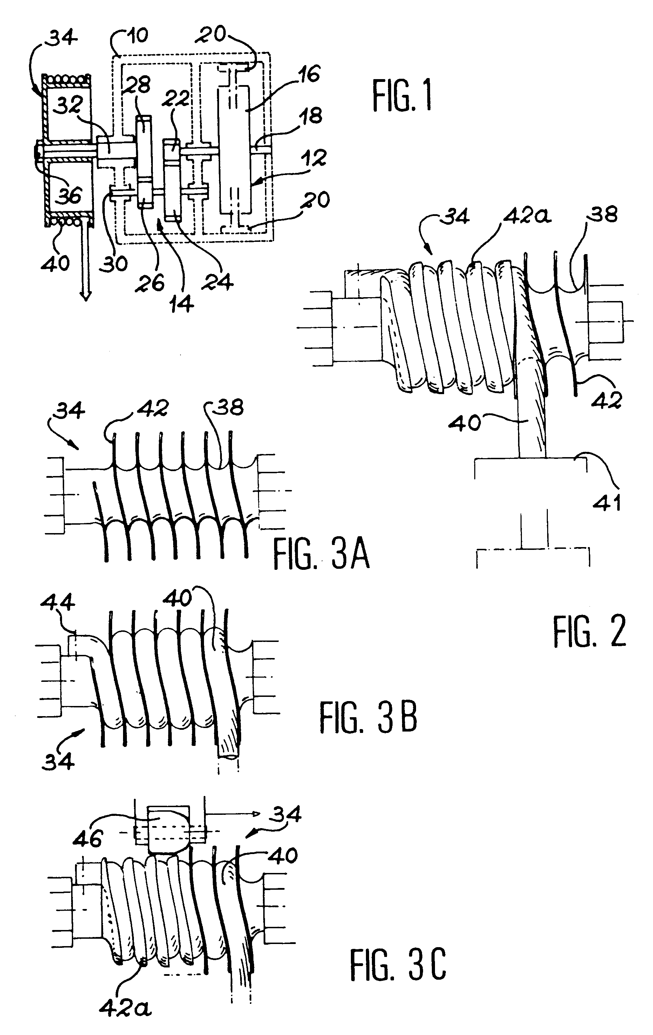

Sur la figure 1, on a représenté de façon très schématique un régulateur à câble conçu pour réguler la vitesse de déploiement d'un appendice déployable tel qu'un générateur solaire équipant un satellite artificiel ou un engin spatial comparable. Ce régulateur à câble comprend un carter 10 prévu pour être fixé sur le corps du satellite, à proximité de l'appendice dont le déploiement doit être assuré après la mise en orbite. Ce carter 10 délimite deux compartiments dans lesquels sont logés respectivement un frein centrifuge 12 à masselotte et un mécanisme multiplicateur de vitesse 14. Ces deux dispositifs, bien connus des spécialistes, ne seront pas décrits en détail.

Le frein centrifuge 12 comporte un rotor 16 supporté par un axe 18 à l'intérieur du carter 10, ce rotor 16 étant équipé de masselottes (non représentées) mobiles radialement sous l'effet de la force centrifuge, de façon à appliquer contre une piste définie par la surface intérieure du carter 10 des patins de frottement 20.

Le mécanisme multiplicateur de vitesse 14 comprend quant à lui un pignon 22 monté à l'extrémité de l'arbre 18, des pignons 24 et 26 montés sur un arbre 30 parallèle à l'arbre 18 et un pignon 28 monté sur un arbre 32 aligné avec l'arbre 18. En outre, le pignon 22 est en prise sur le pignon 24 et le pignon 26 est en prise sur le pignon 28, de telle sorte que la rotation de l'arbre 32 est transmise à l'arbre 18 avec une vitesse accrue définie par les diamètres respectifs des pignons.

Le régulateur à câble illustré sur la figure 1 comprend de plus, conformément à l'invention, une bobine à câble captif 34 qui est montée sur l'arbre 32 à l'extérieur du carter 10, à l'aide d'un écrou 36 ou d'un organe similaire permettant à un opérateur de remplacer facilement la bobine 34.

Conformément à une caractéristique essentielle de l'invention, la bobine 34 comporte sur sa surface extérieure une gorge 38 (figure 2) qui présente sensiblement la forme d'une hélice et dans laquelle est enroulé, sous la forme d'une spire unique, un câble 40 emprisonné sur la gorge 38 d'une manière qui sera décrite par la suite. Une première extrémité du câble 40 est fixée sur la bobine 34, alors que l'extrémité opposée de ce câble est fixée sur l'appendice déployable 41 dont on désire contrôler le déploiement.

Dans un premier mode de réalisation de l'invention illustré sur la figure 2, la bobine à câble captif 34 est réalisée en une seule pièce, par usinage d'un bloc métallique présentant la forme d'un cylindre de révolution. Ce bloc métallique est un bloc d'un matériau très ductile tel que de l'aluminium ou du cuivre.

Plus précisément, la gorge 38 est usinée en hélice sur la surface extérieure de ce bloc métallique, de façon à former entre les spires adjacentes de cette gorge une cloison hélicoïdale 42, de très faible épaisseur, comme l'illustre notamment la figure 3A. La largeur de la gorge 38 ainsi usinée dans le bloc métallique est sensiblement égale au diamètre du câble 40 et sa profondeur est supérieure à ce diamètre.

Dans un deuxième stade de fabrication de la bobine à câble captif 34 illustrée sur la figure 3B, une première extrémité du câble 40 est fixée en 44, par tout moyen approprié, sur une extrémité de la bobine 34 et ce câble 40 est enroulé dans la gorge hélicoïdale 38 sous la forme d'un brin unique. Dans ces conditions, la partie extérieure de la cloison hélicoïdale 42 fait saillie au-delà du câble 40.

Une dernière étape de la fabrication de la bobine à câble captif 34, illustrée sur la figure 3C, consiste à enfermer le câble 40 dans la gorge 38 en rabattant la partie extérieure 42a de la cloison 42 à l'aide d'une molette de sertissage 46. A la fin de cette opération, la gorge hélicoïdale 38 présente, à l'extérieur du câble 40, une largeur inférieure au diamètre de ce dernier. Par conséquent, un échappement du câble 40 hors de la bobine 34 sous l'effet de la raideur naturelle du câble n'est pas possible, de sorte que tout risque de foisonnement du câble pouvant entraîner un coincement de celui-ci est empêché.

Par ailleurs, étant donné que l'immobilisation du câble 40 sur la bobine 34 est rèalisée sans avoir recours à un matériau d'appoint tel qu'une colle, les inconvénients précédemment mentionnés inhérents à l'utilisation d'un tel produit additionnel sont supprimés.

En se reportant à nouveau à la figure 2, on voit que le déploiement de l'appendice 41 auquel est fixée l'extrémité du câble 40 opposée à l'extrémité reliée à la bobine 34 se traduit par un déroulement progressif du câble 40 hors de la bobine 34, qui a pour effet de ramener au moins partiellement la partie extérieure de la cloison 42, préalablement rabattue à l'aide de la molette 46, dans un état voisin de son état initial.

Bien entendu, l'épaisseur de la cloison 42 et la longueur de la partie extérieure rabattue de cette cloison sont déterminées initialement afin, d'une part, de garantir le maintien du câble 40 dans la gorge 38 avant la commande du déploiement de l'appendice, notamment sous l'effet des vibrations qui se produisent lors du lancement du satellite et, d'autre part, afin que le couple résistant exercé par cette partie extérieure rabattue sur le câble 40 lors du déroulement de ce dernier ne soit pas trop important pour s'opposer au déroulement du câble. Ce dernier critère impose généralement un effort résistant maximum d'environ 3N. La nature du métal très ductile dans lequel est formée la bobine 34 contribue également à l'obtention du compromis désiré entre ces deux valeurs extrèmes.

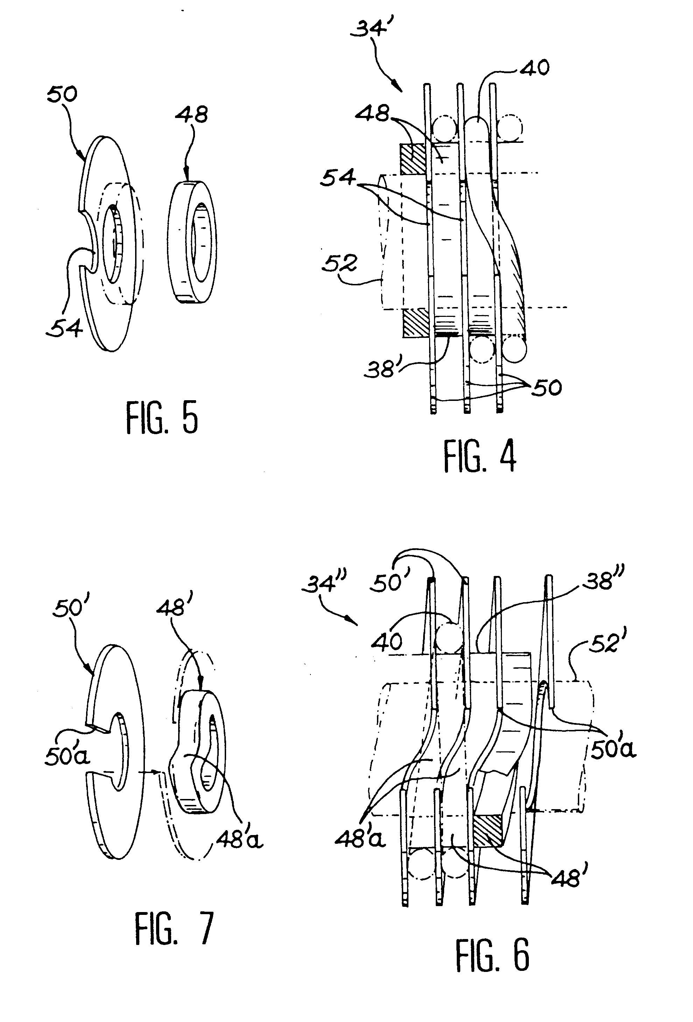

Les figures 4 et 5 illustrent un deuxième mode de réalisation de la bobine à câble captif selon l'invention. Dans ce deuxième mode de réalisation, la bobine 34', au lieu d'être réalisée en une seule pièce à partir d'un bloc métallique usiné, est constituée par un empilement de deux types de rondelles 48 et 50 disposées alternativement sur un axe 52.

Les rondelles 48 et 50, qui sont représentées séparément sur la figure 5, sont des rondelles plates de dimensions différentes. Plus précisément, les rondelles 48 sont des rondelles épaisses et de relativement petit diamètre, alors que les rondelles 50 sont des rondelles de très faible épaisseur et de plus grand diamètre.

Comme on le voit notamment sur la figure 4, l'épaisseur des rondelles 48 est sensiblement égale au diamètre du câble 40, de telle sorte que, lorsque les rondelles 48 et 50 sont empilées de façon alternée, elles forment des gorges circulaires juxtaposées qui communiquent entre elles par une échancrure extérieure 54 formée dans chacune des rondelles 50, les échancrures 54 de toutes les rondelles 50 étant alignées selon une génératrice de la bobine 34'. Les gorges circulaires formées entre les rondelles 50 et les échancrures 54 formées dans ces dernières définissent ainsi une gorge 38' ayant sensiblement la forme d'une hélice, dans laquelle le câble 40 peut être bobiné sous la forme d'une spire unique.

Le diamètre extérieur des rondelles 50 excède le diamètre extérieur des rondelles 48 d'une valeur supérieure à deux fois le diamètre du câble 40, de telle sorte que la partie extérieure de chacune des rondelles 50 fait saillie au-delà du câble 40 lorsque ce dernier est enroulé sur la bobine 34' de la manière qui vient d'être décrite. De plus, les rondelles 50 sont réalisées en un métal très ductile tel que de l'aluminium ou du cuivre. Par conséquent, le câble 40 peut être emprisonné en rabattant le bord extérieur des rondelles 50 au moyen d'une molette, de la manière décrite précédemment en se référant à la figure 3C pour le premier mode de réalisation de la bobine. La largeur de la gorge sensiblement hélicoïdale 38' est alors inférieure au diamètre du câble 40 à l'extérieur de ce dernier, de telle sorte que celui-ci est emprisonné sur la bobine 34' tant que l'effort de traction résultant du déploiement de l'appendice n'est pas exercé sur le câble 40.

Sur les figures 6 et 7, on a représenté un troisième mode de réalisation de l'invention qui constitue une variante du mode de réalisation qui vient d'être décrit en se référant aux figures 4 et 5.

Plus précisément, la bobine à câble captif 34'' illustrée sur la figure 6 est formée, comme dans le mode de réalisation de la figure 4, d'un empilement de deux types de rondelles 48' et 50' placées alternativement autour d'un axe 52'. Les rondelles 48' sont ici encore des rondelles épaisses et de relativement petit diamètre, alors que les rondelles 50' sont des rondelles métalliques très ductiles, de très faible épaisseur et de plus grand diamètre. Plus précisément, l'épaisseur des rondelles 48' est sensiblement égale au diamètre du câble 40 et le diamètre des rondelles 50' est supérieur au double du diamètre du câble 40.

Ce mode de réalisation des figures 6 et 7 se distingue principalement de celui des figures 4 et 5 par le fait qu'au lieu d'être des rondelles plates, les rondelles 48' sont déformées par gauchissement sur une distance sensiblement égale à leur épaisseur, de façon à former une spire sur la majeure partie de leur circonférence, à l'exception d'une discontinuité 48'a reliant les extrémités de cette spire. Par ailleurs, les rondelles 50', initialement plates, sont interrompues en 50'a, sur un secteur angulaire au moins égal à celui formé par chacune des discontinuités 48'a des rondelles 48'.

Comme l'illustre la figure 6, les rondelles 48' et 50' sont empilées de façon alternée d'une manière telle que les discontinuités 48'a des rondelles 48' ainsi que les interruptions 50'a des rondelles 50' soient alignées selon une même génératrice de la bobine 34'. Cette caractéristique permet de former entre les rondelles 50' une gorge 38'' dont la forme est ici pratiquement celle d'une hélice, contrairement à la gorge 38' dans le mode de réalisation de la figure 4. La bobine à câble captif 34'' présente par ailleurs des caractéristiques analogues à celles des modes de réalisation précédents, c'est-à-dire que le câble 40 qui est enroulé sous la forme d'une spire unique dans la gorge 38'' est maintenu dans cette dernière en rabattant la partie extérieure en saillie des rondelles 50' à l'aide d'une molette, conformément à la description faite précédemment en référence à la figure 3C.

Bien entendu, l'invention n'est pas limitée aux modes de réalisation qui viennent d'être décrits à titre d'exemples, mais en couvre toutes les variantes possibles dans le cadre des revendications. Ainsi, on comprendra qu'au lieu d'être constitué par une partie extérieure rabattue d'une cloison séparant les spires adjacentes de la gorge sensiblement en forme d'hélice formée sur la bobine, le câble 40 peut être emprisonné en diminuant d'une autre manière la largeur de la gorge jusqu'à une valeur inférieure à celle du diamètre du câble à l'extérieur de ce dernier. Le mode de réalisation décrit, notamment en se référant à la figure 2 et aux figures 3A à 3C, présente cependant l'avantage d'être particulièrement simple et facile à mettre en oeuvre.

## Revendications

1. Bobine à câble captif, caractérisée par le fait que la bobine comporte sur sa surface extérieure une gorge (38,38',38'') sensiblement en forme d'hélice, dans laquelle est enroulé le câble (40) cette gorge comportant, à l'extérieur du câble, une zone de maintien (42a) de largeur inférieure au diamètre de ce dernier.

2. Bobine selon la revendication 1, caractérisée par le fait que la gorge (38,38',38'') contient un seul brin du câble (40) et que ladite zone de maintien est formée par une partie extérieure (42a) d'une cloison (42,50,50') séparant deux spires adjacentes de ladite gorge, rabattue sur le câble et qui se déforme de façon permanente lorsque ce dernier sort de la gorge.

3. Bobine selon la revendication 2, caractérisée par le fait que ladite cloison (42) est réalisée d'une seule pièce avec une partie centrale de la bobine, ladite gorge (38) étant usinée dans un bloc métallique constituant cette dernière.

4. Bobine selon la revendication 2, caractérisée par le fait qu'elle comprend un empilement formé alternativement d'une première rondelle (48,48') de relativement petit diamètre et d'épaisseur sensiblement égale au diamètre du câble (40), et d'une deuxième rondelle (50,50') plus fine et de plus grand diamètre, formant ladite cloison.

5. Bobine selon la revendication 4, caractérisée par le fait que les premières rondelles (48) et les deuxièmes rondelles (50) sont plates, les deuxièmes rondelles présentant des échancrures extérieures alignées (54) pour le passage du câble (40) d'une spire à l'autre.

6. Bobine selon la revendication 4, caractérisée par le fait que les premières rondelles (48') sont déformées par gauchissement sur une distance sensiblement égale à leur épaisseur, de façon à définir des discontinuités (48'a) alignées, les deuxièmes rondelles (50') étant interrompues (50'a) de part et d'autre de ces discontinuités, pour le passage du câble (40) d'une spire à l'autre.

7. Régulateur à câble, pour le déploiement d'un appendice d'engin spatial, comprenant un frein centrifuge (12) en prise, par l'intermédiaire d'un multiplicateur de vitesse (14) sur une bobine (34,34',34'') sur laquelle est enroulé un câble (40) dont l'extrémité opposée est fixée sur ledit appendice déployable, caractérisé par le fait que la bobine (34,34',34'') est réalisée conformément à l'une quelconque des revendications précédentes, montée par des moyens de fixation démontables (36) sur un arbre (32) du multiplicateur de vitesse, à l'extérieur d'un carter (10) contenant ce dernier ainsi que le frein centrifuge.

## Claims

1. Captive cable reel, characterized in that on its outer surface the reel has a roughly helical or spiral-shaped throat (38, 38', 38'') on which the cable (40) is wound, this throat comprising, outside the cable, a holding zone (42a) whose width is smaller than the diameter of the cable.

2. Reel according to claim 1, characterized in that the throat (38, 38', 38'') contains a single strand or ply of the cable (40) and said holding zone is formed by one external portion (42a) of a partition (42, 50, 50') separating two adjacent turns of said throat and folded back onto the cable and permanently deforms when the cable comes out of the throat.

3. Reel according to claim 2, characterized in that said partition (42) is made in one piece with a central portion of the reel, said throat (38) being machined in a metallic block constituting the latter.

4. Reel according to claim 2, characterized in that it comprises a stack formed alternately of a first washer (48, 48') with a relatively small diameter and whose thickness is roughly equal to the diameter of the cable (40), and a second thinner washer (50, 50') with a larger diameter, forming said partition.

5. Reel according to claim 4, characterized in that the first (48) and second (50) washers are flat, the second washers having external scallopings (54) aligned for passage of the cable (40) from one turn to another.

6. Reel according to claim 4, characterized in that the first washers (48') are deformed by twisting over a distance roughly equal their thickness so as to define aligned discontinuities (48'a), the second washers (50') being interrupted (50'a) on both sides of these discontinuities for the passage of the cable (40) from one turn to another.

7. Cable regulator for the deployment of a lengthening piece of a spacecraft and including a centrifugal brake (12) geared by means of a speed multiplier (14) onto a reel (34, 34', 34'') on which a cable (40) is wound, the opposing extremity of said cable being secured to said deployable lengthening piece, characterized in that the reel (34, 34', 34'') is in accordance with any one of the preceding claims, mounted by dismantlable fixing means (36) on a shaft (32) of the speed multiplier outside a housing (10) containing the latter and the centrifugal brake.

## Patentansprüche

1. Haspel mit gefangenem Kabel, **dadurch gekennzeichnet, daß** die Haspel auf ihrer Außenfläche iene im wesentlichen wendelförmige Rille (38, 38', 38'') aufweist, in der das Kabel (40) aufgewickelt ist, wobei diese Rille außerhalb des Kabels eine Haltezone (42a) aufweist, deren Breite geringer ist als der Kabeldurchmesser.

2. Haspel nach Anspruch 1, **dadurch gekennzeichnet, daß** die Rille (38, 38', 38'') einen einzigen Strang des Kabels (40) enthält, und daß die genannte Haltezone von einem äußeren Teil (42a) einer Trennwand (42, 50, 50'), die zwei aneinandergrenzende Windungen der genannten Rille voneinander trennt, gebildet wird, der über dem Kabel umgeschlagen ist und sich konstant verformt, wenn letzteres aus der Rille austritt.

3. Haspel nach Anspruch 2, **dadurch gekennzeichnet, daß** die genannte Trennwand (42) aus einem einzigen Stück mit einem mittleren Teil der Haspel ausgeführt ist, wobei die genannte Rille (38) aus einem Metallblock herausgebildet wird, aus dem letztere besteht.

4. Haspel nach Anspruch 2, **dadurch gekennzeichnet, daß** sie aus einem Stapel von abwechselnd einer ersten Scheibe (48, 48') mit verhältnismäßig geringerem Durchmesser und einer Dicke, die im wesentlichen gleich groß ist wie der Durchmesser des Kabels (40), und einer zweiten, dünneren Scheibe (50, 50') mit größerem Durchmesser, die die gesamte Trennwand bilden, besteht.

5. Haspel nach Anspruch 4, **dadurch gekennzeichnet, daß** die ersten Scheiben (48) und die zweiten Scheiben (50) flach sind, wobei die zweiten Scheiben ausgerichtete äußere bogenförmige Ausschnitte (54) für den Durchgang des Kabels (40) von einer Windung zur nächsten aufweisen.

6. Haspel nach Anspruch 4, **dadurch gekennzeichnet, daß** die ersten Scheiben (48') durch Verwinden über eine Strecke, die im wesentlichen gleich groß ist wie ihre Dicke, verformt sind, so daß sie ausgerichtete Unregelmäßigkeiten (48'a) bilden, wobei die zweiten Scheiben (50') beiderseits dieser Unregelmäßigkeiten für den Durchgang des Kabels (40) von einer Windung zur nächsten unterbrochen sind (50'a).

7. Regler mit Kabel für die Entfaltung eines Ansatzteils eines Raumflugkörpers, bestehend aus einer Zentrifugalbremse (12), die über eine Übersetzung (14) an einer Haspel (34, 34', 34'') angreift, auf der ein Kabel (40) aufgewickelt ist, dessen anderes Ende an dem genannten entfaltbaren Ansatzteil befestigt ist, **dadurch gekennzeichnet, daß** die Haspel (34, 34', 34'') gemäß einem der vorherigen Ansprüche ausgeführt ist und mit abbaubaren Befestigungsmitteln (36) an einer Welle (32) der Übersetzung angebracht ist, und zwar außerhalb eines Gehäuses (10), das diese Übersetzung sowie die Zentrifugalbremse enthält.
